# EUROPEAN PATENT APPLICATION

(11) **EP 4 597 566 A1**
(43) Date of publication of application: **06.08.2025**
(21) Application number: 23872412.4
(22) Date of filing: 27.09.2023
(51) Int. Cl.: H01L 23/40, H01L 23/12

(54) **SEMICONDUCTOR MODULE**

(30) Priority: 29.09.2022 JP 2022157107
(71) Applicant: Kyocera Corporation, Kyoto-shi, Kyoto 612-8501 (JP)
(72) Inventor: YAMAMOTO, Takashi, Kyoto-shi, Kyoto 612-8501 (JP); AKAHOSHI, Tomoyuki, Kyoto-shi, Kyoto 612-8501 (JP); TAKAHASHI, Misa, Kyoto-shi, Kyoto 612-8501 (JP)
(74) Representative: Viering, Jentschura & Partner mbB Patent- und Rechtsanwälte
(86) International application number: PCT/JP2023/035132
(87) International publication number: WO 2024/071190

(57) **Abstract**

A semiconductor module includes a substrate, at least one semiconductor element located on the substrate, and an optical fiber cable connected to the semiconductor element. The optical fiber cable is directly or indirectly fixed to the substrate at a plurality of locations.

## Description

### TECHNICAL FIELD

Embodiments of the disclosure relate to a semiconductor module.

### BACKGROUND OF INVENTION

In the related art, a semiconductor module is known in which a semiconductor element (hereinafter, referred to as optical element) for converting an electrical signal into an optical signal is mounted on a substrate. An optical fiber cable for transmitting the converted optical signal from the optical element to the outside may be connected to the semiconductor module (see Patent Document 1).

### CITATION LIST

### PATENT LITERATURE

Patent Document 1: JP 2020-9824 A

### SUMMARY

A semiconductor module according to the present disclosure includes a substrate, at least one semiconductor element located on the substrate, and an optical fiber cable connected to the semiconductor element. The optical fiber cable is directly or indirectly fixed to the substrate at a plurality of locations.

### BRIEF DESCRIPTION OF THE DRAWINGS

FIG. 1 is a plan view of a semiconductor module according to an embodiment.
FIG. 2 is a side view of the semiconductor module according to the embodiment.
FIG. 3 is a plan view of a semiconductor module according to another embodiment 1.
FIG. 4 is a side view of the semiconductor module according to another embodiment 1.
FIG. 5 is an enlarged plan view of the semiconductor module according to another embodiment 1.
FIG. 6 is an enlarged plan view of a semiconductor module according to another embodiment 2.
FIG. 7 is a plan view of a semiconductor module according to another embodiment 3.
FIG. 8 is an enlarged plan view of the semiconductor module according to another embodiment 3.
FIG. 9 is a plan view of a semiconductor module according to another embodiment 4.
FIG. 10 is a side view of the semiconductor module according to another embodiment 4.
FIG. 11 is a plan view of a semiconductor module according to another embodiment 5.
FIG. 12 is an enlarged plan view of the semiconductor module according to another embodiment 5.

### DESCRIPTION OF EMBODIMENTS

Hereinafter, embodiments of a semiconductor module disclosed in the present disclosure will be described with reference to the accompanying drawings. Note that the present disclosure is not limited by the following embodiments. In addition, embodiments can be appropriately combined within a range so as not to contradict each other in terms of processing content. In the following embodiments, the same portions are denoted by the same reference signs, and redundant descriptions will be omitted.

In the following embodiments, expressions such as "constant", "orthogonal", "perpendicular", and "parallel" may be used, but these expressions need not mean exactly "constant", "orthogonal", "perpendicular", and "parallel". That is, each of the expressions described above allows for deviations in, for example, manufacturing accuracy, installation accuracy, and the like.

In each of the drawings, which will be referred to below, for easy understanding of explanation, an X-axis direction, a Y-axis direction, and a Z-axis direction that are orthogonal to each other may be defined to illustrate a rectangular coordinate system in which a positive direction of the Z-axis is a vertically upward direction.

In the related art, a semiconductor module is known in which a semiconductor element (hereinafter, referred to as optical element) for converting an electrical signal into an optical signal is mounted on a substrate. An optical fiber cable for transmitting the converted optical signal from the optical element to the outside may be connected to the semiconductor module.

However, in the related art described above, the optical fiber cable is fixed only on the semiconductor element. Therefore, when vibration or impact is applied to the substrate or the optical fiber cable from the outside, there is a concern that the connection portion of the optical fiber cable may be damaged.

Thus, the realization of a technique that can overcome the aforementioned problems and improve the mechanical strength of the semiconductor module is expected.

### Embodiments

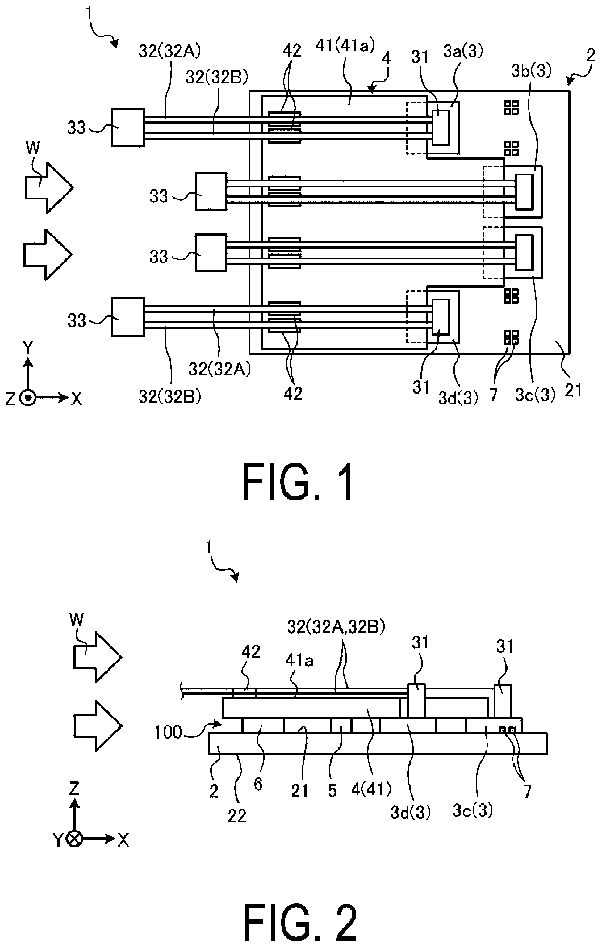

First, a semiconductor module 1 according to an embodiment will be described with reference to FIGs. 1 and 2. FIG. 1 is a plan view of the semiconductor module 1 according to the embodiment, and FIG. 2 is a side view of the semiconductor module 1 according to the embodiment.

Note that, in the following embodiments, a case where the semiconductor module 1 is an optical module in which an optical element 3 is mounted on a substrate will be described as an example, but the semiconductor module of the present disclosure is not necessarily required to be an optical module.

As illustrated in FIGs. 1 and 2, the semiconductor module 1 according to the embodiment includes a substrate 2, a plurality of optical elements 3 (optical elements 3a to 3d), and a heat dissipation member 4. The optical element 3 is an example of the semiconductor element.

The substrate 2 has, for example, a quadrilateral plate shape in plan view. In addition to the plurality of optical elements 3a to 3d and the heat dissipation member 4, a power supply IC 5, a control IC 6, a plurality of passive components 7, and the like are located on a first surface 21 (here, an upper surface) of the substrate 2. Examples of the passive component 7 include a resistor, a capacitor, and a coil.

Although not illustrated in FIGs. 1 and 2, a connector is located on a second surface 22 (here, a lower surface) of the substrate 2. The substrate 2 is electrically connected to a motherboard via the connector.

The optical element 3 is a semiconductor element that converts an electrical signal into an optical signal. The optical element 3 may convert an optical signal into an electrical signal. An interface portion 31 is located on an upper surface of each of the optical elements 3.

The interface portion 31 is connected to an optical connector 33 via an optical fiber cable 32. That is, the optical fiber cable 32 is fixed to the substrate 2 via the interface portion 31 and the optical element 3.

In the embodiment, the interface portion 31 and the optical connector 33 may be connected to each other via a plurality of optical fiber cables 32. For example, in the embodiment, the interface portion 31 and the optical connector 33 may be connected to each other via a transmission-side cable group 32A and a reception-side cable group 32B.

The transmission-side cable group 32A includes a plurality of optical fiber cables 32 for transmitting optical signals transmitted from the optical elements 3. The reception-side cable group 32B includes a plurality of optical fiber cables 32 for transmitting optical signals received by the optical elements 3.

The heat dissipation member 4 is a so-called heat sink and is located above the plurality of optical elements 3. Note that the heat dissipation member 4 need not necessarily cover all of the plurality of optical elements 3 from above. That is, as illustrated in FIG. 1, the upper surfaces of the plurality of optical elements 3 may be partially exposed from the heat dissipation member 4.

The heat dissipation member 4 is close to the plurality of optical elements 3 and dissipates heat generated from the optical elements 3 to the outside of the semiconductor module 1. Note that the heat dissipation member 4 may be in direct contact with the optical elements 3. Alternatively, the heat dissipation member 4 may be in contact with the optical elements 3 via a thermal interface material (TIM). That is, the heat dissipation member 4 may be thermally connected to the plurality of optical elements 3.

The heat dissipation member 4 may be formed of metal with relatively high thermal conductivity, such as aluminum, copper, or iron. TIM is a composite material containing a thermally conductive filler in a resin.

The heat dissipation member 4 includes a first portion 41 and a plurality of third portions (not illustrated). The first portion 41 is a plate-shaped portion arranged to face the first surface 21 of the substrate 2 with an interval therebetween. The plurality of third portions are leg-shaped portions provided on the first portion 41. Specifically, the plurality of third portions extend from the first portion 41 toward the substrate 2 and are in contact with the substrate 2 (provided on the substrate 2). The plurality of third portions are located at intervals from each other along a predetermined direction (Y-axis direction in the drawing).

The third portions have a shape in which a thickness is partially increased from the first portion 41. The third portions may be integrated with the first portion 41. The plurality of third portions may be connected to the first portion 41 and the substrate 2. The plurality of third portions extend in a constant direction (here, X-axis direction).

In the embodiment, the optical fiber cable 32 extends from the interface portion 31 in a direction approaching the heat dissipation member 4 (in the negative direction of the X-axis in the drawing), passes above the heat dissipation member 4 in the same direction, and extends to the optical connector 33.

Here, in the embodiment, the optical fiber cable 32 may be fixed to the heat dissipation member 4 by an elastic member 42 located between the optical fiber cable 32 and the heat dissipation member 4. In other words, the optical fiber cable 32 may be fixed to the substrate 2 via the elastic member 42 and the heat dissipation member 4.

As such, in the embodiment, the optical fiber cable 32 may be indirectly fixed to the substrate 2 at a plurality of locations (here, the interface portion 31 and the elastic member 42). As a result, when vibration or impact is applied to the substrate 2 or the optical fiber cable 32 from the outside, application of an excessive load to the connection portion (that is, the interface portion 31) of the optical fiber cable 32 can be reduced.

That is, in the embodiment, the mechanical strength of the semiconductor module 1 can be improved. In the embodiment, since the optical fiber cable 32 is fixed to the substrate 2 at the plurality of locations, damage to the connection portion of the optical fiber cable 32 can be reduced.

In the embodiment, the optical fiber cable 32 may be fixed to the substrate 2 via the heat dissipation member 4. Thereby, the mechanical strength of the semiconductor module 1 can be improved, and the heat dissipation efficiency of the plurality of optical elements 3 can be enhanced.

Further, in the embodiment, the optical fiber cable 32 may be fixed to the heat dissipation member 4 via the elastic member 42. Thereby, when vibration or impact is applied to the substrate 2 or the optical fiber cable 32 from the outside, the vibration or impact from the outside can be absorbed by the elastic member 42.

That is, in the embodiment, the mechanical strength of the semiconductor module 1 can be further improved. The elastic member 42 may be made of a material with appropriate elasticity, such as resin, sponge, or a silicon sheet.

In the embodiment, the interface portion 31 and the heat dissipation member 4 may be spaced from each other. As a result, when vibration or impact is applied to the heat dissipation member 4 from the outside, application of vibration or impact from the outside to the interface portion 31 can be reduced.

That is, in the embodiment, the mechanical strength of the semiconductor module 1 can be further improved.

In the example illustrated in FIGs. 1 and 2, a portion in the optical fiber cable 32 is fixed to the substrate 2 via the heat dissipation member 4 and the elastic member 42, but the present disclosure is not limited thereto.

For example, in the technique of the present disclosure, a portion in the optical fiber cable 32 may be directly fixed to the surface (for example, the first surface 21 or the like) of the substrate 2. In the technique of the present disclosure, a portion in the optical fiber cable 32 may be indirectly fixed to the substrate 2 via a member that does not have a heat dissipation function.

This also makes it possible to reduce application of an excessive load to the connection portion of the optical fiber cable 32 when vibration or impact is applied to the substrate 2 or the optical fiber cable 32 from the outside. That is, in the embodiment, the mechanical strength of the semiconductor module 1 can be improved.

As illustrated in FIG. 1, when viewed along the extension direction (X-axis direction) of the optical fiber cable 32, the plurality of optical elements 3a to 3d are aligned along a direction (Y-axis direction) orthogonal to the extension direction. Specifically, the plurality of optical elements 3a to 3d are aligned in the order of the optical element 3d, the optical element 3c, the optical element 3b, and the optical element 3a in the positive direction of the Y-axis.

The plurality of optical elements 3a to 3d are located at intervals from each other. This configuration can reduce thermal interference between the plurality of optical elements 3a to 3d when the optical elements 3a to 3d are located on the substrate 2.

Specifically, as illustrated in FIG. 1, among the plurality of optical elements 3a to 3d, the optical element 3a and the optical element 3b located closest to the optical element 3a are shifted from each other in the extension direction (X-axis direction) of the optical fiber cable 32 and in the direction (Y-axis direction) orthogonal to the extension direction. Similarly, among the plurality of optical elements 3a to 3d, the optical element 3d and the optical element 3c located closest to the optical element 3d are shifted from each other in the X-axis direction and the Y-axis direction.

As such, the plurality of optical elements 3 are arranged while being shifted from each other. Thus, in the embodiment, the size of the substrate 2 can be reduced while ensuring the distance between the adjacent optical elements 3, in other words, reducing the thermal interference between the adjacent optical elements 3.

Here, an example has been described in which two optical elements close to each other among the plurality of optical elements 3a to 3d (for example, the optical elements 3a and 3b) are spaced from each other in the X-axis direction and the Y-axis direction. However, the present disclosure is not limited thereto. For example, in all of the plurality of optical elements 3a to 3d, the positions of two adjacent semiconductor elements may be shifted in the extension direction (X-axis direction) of the optical fiber cable 32 and the direction (Y-axis direction) orthogonal to the extension direction.

For example, the plurality of optical elements 3a to 3d may be alternately arranged. Even with this, the size of the substrate 2 can be reduced while reducing the thermal interference between the optical elements 3.

A blower (not illustrated) such as a cooling fan for sending air to the semiconductor module 1 may be located on the negative direction side of the X-axis of the semiconductor module 1. Such a blower generates air W flowing in the positive direction of the X-axis.

The air W sent from the blower hits the first portion 41 of the heat dissipation member 4 and flows along the first surface 21 of the substrate 2 so as to pass through a ventilation path 100 formed between the substrate 2 and the first portion 41.

In the embodiment, the air W hits the plurality of optical elements 3 located on an exit side of the ventilation path 100, so that the heat dissipation efficiency of the plurality of optical elements 3 can be further enhanced.

In the embodiment, since the plurality of optical elements 3 are aligned along the direction (here, Y-axis direction) intersecting the direction in which the air W flows, the air W substantially equally hits all the optical elements 3. Thus, according to the embodiment, the heat dissipation efficiency of the plurality of optical elements 3 can be further enhanced.

As illustrated in FIG. 2, the power supply IC 5 and the control IC 6 may be located below the heat dissipation member 4. The power supply IC 5 and the control IC 6 may be thermally connected to the heat dissipation member 4. Thus, heat generated from the power supply IC 5 and the control IC 6 can be efficiently dissipated by the heat dissipation member 4.

For example, the power source IC 5 may be located in plurality on the substrate 2. Thus, power can be supplied to the optical elements 3 at a plurality of types of reference voltages.

### Other Embodiments

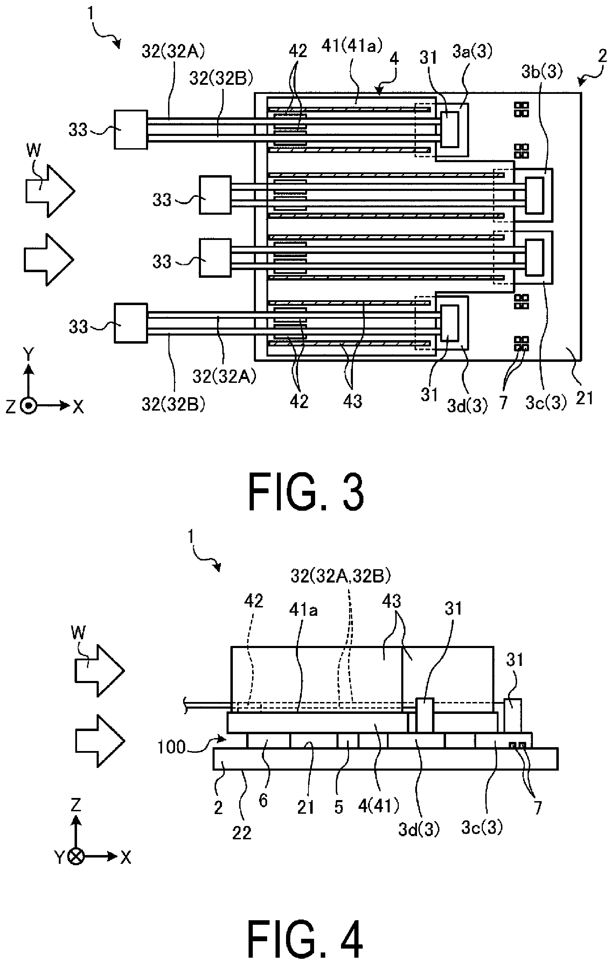

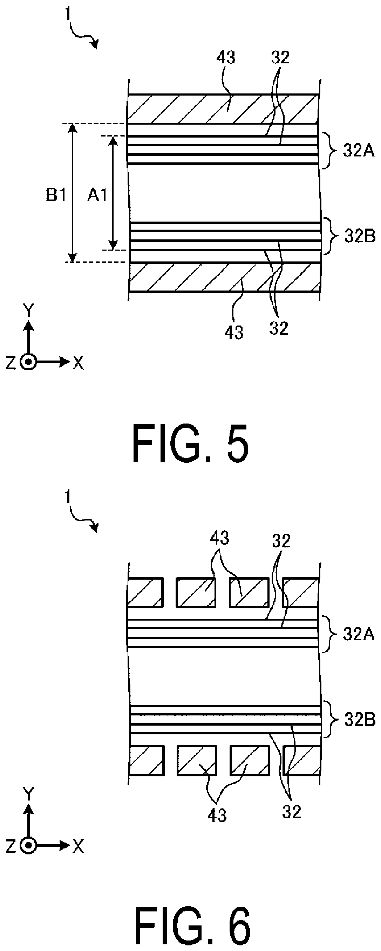

Subsequently, the semiconductor module 1 according to other embodiments will be described with reference to FIGs. 3 to 12. FIG. 3 is a plan view of a semiconductor module 1 according to another embodiment 1, and FIG. 4 is a side view of the semiconductor module 1 according to another embodiment 1. FIG. 5 is an enlarged plan view of the semiconductor module 1 according to another embodiment 1.

As illustrated in FIG. 3 and the like, in another embodiment 1, the configuration of the heat dissipation member 4 differs from the embodiment described above. Specifically, in another embodiment 1, the heat dissipation member 4 may include a first portion 41, a third portion (not illustrated), and a plurality of second portions 43.

The plurality of second portions 43 are located standing on an upper surface 41a of the first portion 41. In another embodiment 1, the second portion 43 has a plate shape (i.e., a heat dissipation fin). The plate-shaped second portion 43 is located, for example, along the same direction as the direction in which the optical fiber cable 32 extends (X-axis direction in the drawing). The plurality of second portions 43 are located aligned in a direction (Y-axis direction in the drawing) perpendicular to the direction in which the second portions 43 extend.

As such, by providing the plurality of second portions 43 located standing on the upper surface 41a of the first portion 41, the heat dissipation efficiency of the plurality of optical elements 3 can be further improved.

In another embodiment 1, as illustrated in FIG. 3 and the like, the optical fiber cable 32 may be located between the adjacent second portions 43, and the optical fiber cable 32 may be fixed to the upper surface 41a of the first portion 41 via an elastic member 42.

As such, by passing the optical fiber cable 32 between the adjacent second portions 43 and bonding and fixing it to the upper surface 41a of the first portion 41, the need for excessively extending the optical fiber cable 32 in the planar direction of the substrate 2 is eliminated, and there is no need to arrange a separate fixing member.

Therefore, according to another embodiment 1, the semiconductor module 1 can be manufactured in a compact and cost-effective manner.

In another embodiment 1, as illustrated in FIG. 5, an interval B1 between the adjacent second portions 43 may be greater than an overall width A1 of all the optical fiber cables 32 connected to the same optical element 3 (see FIG. 3) (i.e., A1 < B1).

This can reduce interference between all the optical fiber cables 32 connected to the same optical element 3 (see FIG. 3) and the second portion 43 on the upper surface 41a of the first portion 41.

Note that in the example illustrated in FIGs. 3 to 5, the example has been described in which the second portion 43 has a plate shape (i.e., a heat dissipation fin); however, the present disclosure is not limited to this example.

FIG. 6 is an enlarged plan view of a semiconductor module 1 according to another embodiment 2. For example, as illustrated in FIG. 6, the second portion 43 may have a pin shape (i.e., a heat dissipation pin). The plurality of pin-shaped second portions 43 are located in a matrix shape in a state of standing on the upper surface 41a of the first portion 41, for example. Even with this, the heat dissipation efficiency of the plurality of optical elements 3 can be further enhanced.

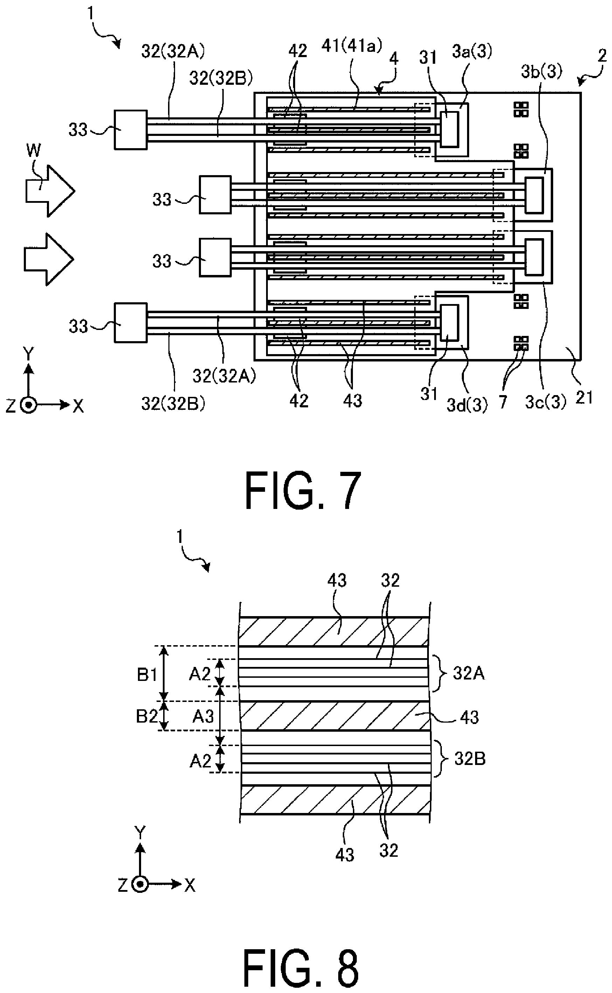

FIG. 7 is a plan view of a semiconductor module 1 according to another embodiment 3, and FIG. 8 is an enlarged plan view of the semiconductor module 1 according to another embodiment 3.

As illustrated in FIG. 7 and the like, in another embodiment 3, the arrangement of the second portions 43 differs from another embodiment 1 described above. Specifically, in another embodiment 3, the second portion 43 is also located between the transmission-side cable group 32A and the reception-side cable group 32B connected to the same optical element 3.

Even with this, the need for excessive extension in the planar direction of the substrate 2 is eliminated, and there is no need to arrange a separate fixing member, as in another embodiment 1. Therefore, according to another embodiment 3, the semiconductor module 1 can be manufactured in a compact and cost-effective manner.

In another embodiment 3, the second portion 43 is also located between the transmission-side cable group 32A and the reception-side cable group 32B connected to the same optical element 3, so that the number of the second portions 43 located on the heat dissipation member 4 can be increased. With this, the heat dissipation efficiency of the plurality of optical elements 3 can be further enhanced.

In another embodiment 3, as illustrated in FIG. 8, the interval B1 between the adjacent second portions 43 may be greater than a width A2 of the transmission-side cable group 32A (or the reception-side cable group 32B) (i.e., A2 < B1).

This can reduce interference between the transmission-side cable group 32A or the reception-side cable group 32B and the second portion 43 on the upper surface 41a of the first portion 41.

In another embodiment 3, an interval A3 between the transmission-side cable group 32A and the reception-side cable group 32B connected to the same optical element 3 may be greater than a width B2 of the second portion 43 (i.e., B2 < A3).

This can reduce interference between the transmission-side cable group 32A or the reception-side cable group 32B and the second portion 43 on the upper surface 41a of the first portion 41.

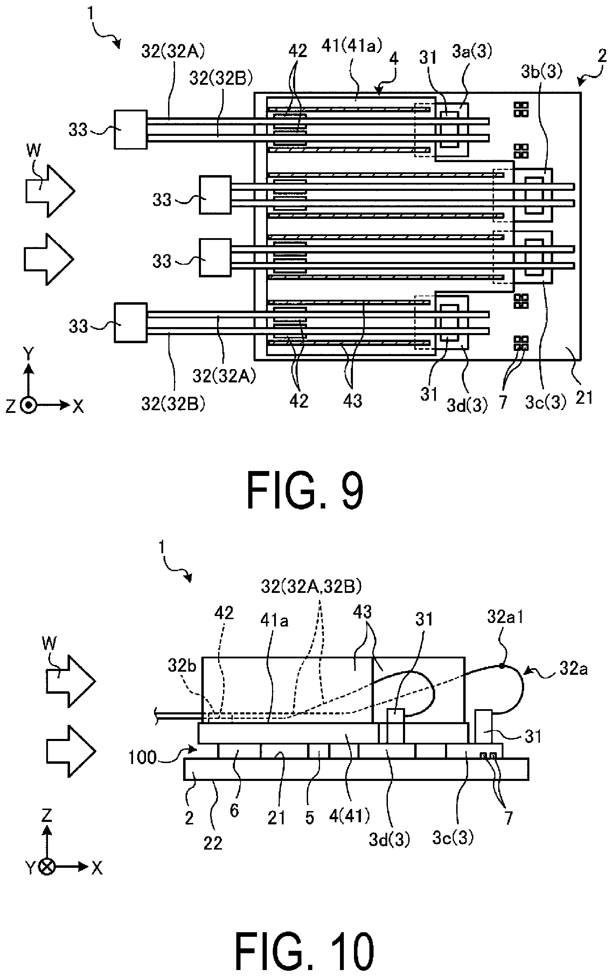

FIG. 9 is a plan view of a semiconductor module 1 according to another embodiment 4, and FIG. 10 is a side view of the semiconductor module 1 according to another embodiment 4. As illustrated in FIG. 10 and the like, in another embodiment 4, the arrangement of the optical fiber cables 32 differs from each embodiment described above.

Specifically, in another embodiment 4, the optical fiber cable 32 may extend from the interface portion 31 in a direction (positive direction of the X-axis in the drawing) away from the heat dissipation member 4, and may turn around to extend in a direction (negative direction of the X-axis in the drawing) toward the heat dissipation member 4 at a curved portion 32a formed in the optical fiber cable 32.

In another embodiment 4, the optical fiber cable 32, which has turned around to extend in the direction toward the heat dissipation member 4, may be fixed at a portion 32b to the upper surface 41a of the first portion 41 in the heat dissipation member 4.

This can also reduce application of an excessive load to the connection portion of the optical fiber cable 32 when vibration or impact is applied to the substrate 2 or the optical fiber cable 32 from the outside. That is, in the embodiment, the mechanical strength of the semiconductor module 1 can be improved.

In another embodiment 4, the optical fiber cable 32 may be located between the adjacent second portions 43. With this, the need for excessive extension in the planar direction of the substrate 2 is eliminated, and there is no need to arrange a separate fixing member. Therefore, according to another embodiment 4, the semiconductor module 1 can be manufactured in a compact and cost-effective manner.

In another embodiment 4, the direction of the optical fiber cable 32 may be changed by the curved portion 32a. As a result, the application of a large load to the connection portion of the optical fiber cable 32 can be reduced, thereby reducing damage to the connection portion of the optical fiber cable 32.

In another embodiment 4, since the direction of the optical fiber cable 32 is changed by the curved portion 32a, the occurrence of loss in the optical signal transmitted through the optical fiber cable 32 can be reduced. A radius of curvature of the curved portion 32a is preferably equal to or larger than 15 mm, for example.

In another embodiment 4, as illustrated in FIG. 10, an upper end portion 32a1 of the curved portion 32a may be located at a position higher than the portion 32b of the optical fiber cable 32 fixed to the heat dissipation member 4.

As such, since the radius of curvature of the curved portion 32a can be increased by increasing the height of the upper end portion 32a1 of the curved portion 32a, damage to the connection portion of the optical fiber cable 32 can be reduced, and the occurrence of loss in the optical signal can be reduced.

By lowering the portion 32b fixed to the heat dissipation member 4, the height of the second portion 43 itself can be increased even if the height of the entire heat dissipation member 4 is the same. As a result, the heat dissipation efficiency of the plurality of optical elements 3 can be further enhanced.

In each embodiment described so far, an example in which a pair of the interface portion 31 and the optical connector 33 is connected by two cable groups (the transmission-side cable group 32A and the reception-side cable group 32B) has been described. However, the present disclosure is not limited to this example.

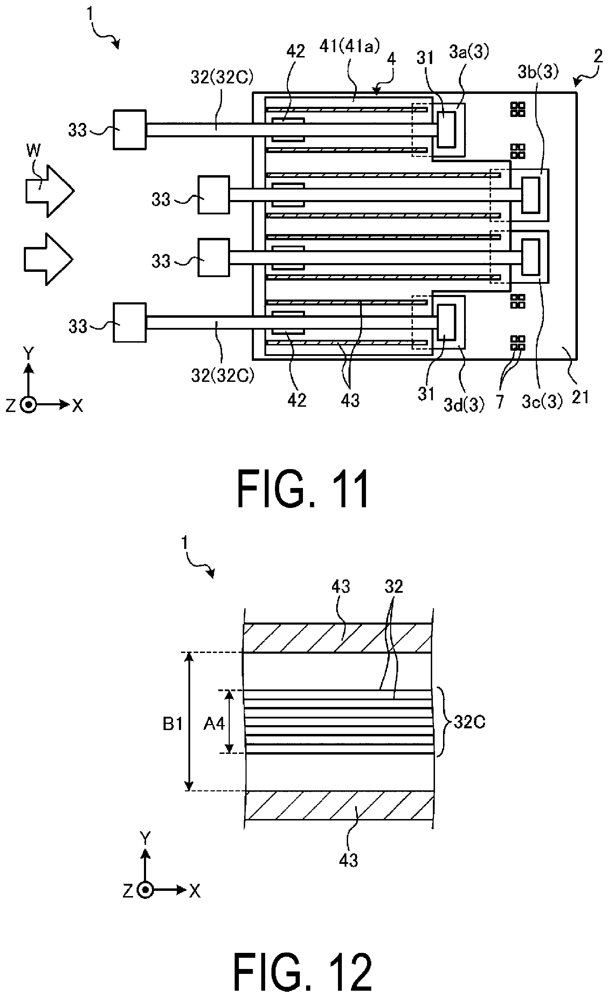

FIG. 11 is a plan view of a semiconductor module 1 according to another embodiment 5, and FIG. 12 is an enlarged plan view of the semiconductor module 1 according to another embodiment 5. As illustrated in FIG. 11 and the like, in another embodiment 5, a pair of the interface portion 31 and the optical connector 33 may be connected by one optical fiber cable group 32C.

Such an optical fiber cable group 32C may include an optical fiber cable 32 that transmits an optical signal transmitted from the optical element 3 or may include an optical fiber cable 32 that transmits an optical signal received by the optical element 3.

In another embodiment 5, a portion in the optical fiber cable group 32C may be fixed to the heat dissipation member 4. This can improve mechanical strength of the semiconductor module 1.

In another embodiment 5, as illustrated in FIG. 12, the interval B1 between the adjacent second portions 43 may be greater than a width A4 of the optical fiber cable group 32C (i.e., A4 < B1).

This can reduce interference between the optical fiber cable group 32C and the second portion 43 on the upper surface 41a of the first portion 41.

Although embodiments of the present disclosure have been described above, the present disclosure is not limited to the embodiments described above, and various changes can be made without departing from the spirit of the present disclosure. For example, in each embodiment described above, the example has been described in which the plurality of elastic members 42 that respectively fix the plurality of cable groups are located aligned in a row in the Y-axis direction, but the present disclosure is not limited to this example.

For example, the plurality of elastic members 42 may be located at the same intervals as the corresponding optical elements 3. This also can improve mechanical strength of the semiconductor module 1.

Additional effects and other aspects can be easily derived by a person skilled in the art. Thus, a wide variety of aspects of the present disclosure are not limited to the specific details and representative embodiments represented and described above. Accordingly, various changes are possible without departing from the spirit or scope of the general inventive concepts defined by the appended claims and their equivalents.

Note that the present technique can also have the following configurations.
(1) A semiconductor module including:
   a substrate;
   at least one semiconductor element located on the substrate; and
   an optical fiber cable connected to the semiconductor element, wherein the optical fiber cable is directly or indirectly fixed to the substrate at a plurality of locations.
(2) The semiconductor module according to (1), further including a heat dissipation member located above the semiconductor element, wherein
   the optical fiber cable is fixed to the substrate via the heat dissipation member.
(3) The semiconductor module according to (2), further including an elastic member located between the optical fiber cable and the heat dissipation member.
(4) The semiconductor module according to (2) or (3), wherein
   the heat dissipation member includes a first portion and a plurality of second portions located standing on the first portion, and
   the optical fiber cable is located between the plurality of second portions adjacent to each other, and is fixed to the first portion.
(5) The semiconductor module according to (4), further including:
   a transmission-side cable group including a plurality of the optical fiber cables configured to transmit an optical signal transmitted from the semiconductor element; and
   a reception-side cable group including a plurality of the optical fiber cables configured to transmit an optical signal received by the semiconductor element, wherein
   the second portion is located between the transmission-side cable group and the reception-side cable group connected to the same semiconductor element.
(6) The semiconductor module according to any one of (2) to (5), further including an interface portion located on an upper surface of the semiconductor element and configured to connect the semiconductor element and the optical fiber cable, wherein
   the optical fiber cable extends from the interface portion in a direction away from the heat dissipation member, and turns around to extend in a direction toward the heat dissipation member at a curved portion formed in the optical fiber cable.
(7) The semiconductor module according to (6), wherein an upper end portion of the curved portion is located at a position higher than a portion of the optical fiber cable fixed to the heat dissipation member.
(8) The semiconductor module according to any one of (2) to (7), further including an interface portion located on an upper surface of the semiconductor element and configured to connect the semiconductor element and the optical fiber cable, wherein the interface portion and the heat dissipation member are spaced from each other.

### REFERENCE SIGNS

1 Semiconductor module
2 Substrate
3, 3a to 3d Optical element (example of semiconductor element)
32 Optical fiber cable
32A Transmission-side cable group
32B Reception-side cable group
32C Optical fiber cable group
32a Curved portion
32a1 Upper end portion
32b Portion
4 Heat dissipation member
41 First portion
41a Upper surface
42 Elastic member
43 Second portion

## Claims

1. A semiconductor module comprising:
a substrate;
at least one semiconductor element located on the substrate; and
an optical fiber cable connected to the semiconductor element, wherein
the optical fiber cable is directly or indirectly fixed to the substrate at a plurality of locations.

2. The semiconductor module according to claim 1, further comprising a heat dissipation member located above the semiconductor element, wherein
the optical fiber cable is fixed to the substrate via the heat dissipation member.

3. The semiconductor module according to claim 2, further comprising an elastic member located between the optical fiber cable and the heat dissipation member.

4. The semiconductor module according to claim 2 or 3, wherein
the heat dissipation member comprises a first portion and a plurality of second portions located standing on the first portion, and
the optical fiber cable is located between the plurality of second portions adjacent to each other, and is fixed to the first portion.

5. The semiconductor module according to claim 4, further comprising:
a transmission-side cable group comprising a plurality of the optical fiber cables configured to transmit an optical signal transmitted from the semiconductor element; and
a reception-side cable group comprising a plurality of the optical fiber cables configured to transmit an optical signal received by the semiconductor element, wherein
the second portion is located between the transmission-side cable group and the reception-side cable group connected to the same semiconductor element.

6. The semiconductor module according to any one of claims 2 to 5, further comprising an interface portion located on an upper surface of the semiconductor element and configured to connect the semiconductor element and the optical fiber cable, wherein
the optical fiber cable extends from the interface portion in a direction away from the heat dissipation member, and turns around to extend in a direction toward the heat dissipation member at a curved portion formed in the optical fiber cable.

7. The semiconductor module according to claim 6, wherein an upper end portion of the curved portion is located at a position higher than a portion of the optical fiber cable fixed to the heat dissipation member.

8. The semiconductor module according to any one of claims 2 to 7, further comprising an interface portion located on an upper surface of the semiconductor element and configured to connect the semiconductor element and the optical fiber cable, wherein
the interface portion and the heat dissipation member are spaced from each other.
